# EUROPÄISCHE PATENTSCHRIFT

(11) **EP 3 600 726 B1**
(45) Veröffentlichungstag und Bekanntmachung des Hinweises auf die Patenterteilung: **19.10.2022**
(21) Anmeldenummer: 18709590.6
(22) Anmeldetag: 08.03.2018
(51) Int. Cl.: B22F 10/28, B22F 12/00, B22F 12/86, B29C 64/153, B29C 64/259, B33Y 10/00, B33Y 30/00, B22F 12/70

(54) **VORRICHTUNG UND VERFAHREN ZUM HERSTELLEN VON DREIDIMENSIONALEN WERKSTÜCKEN**
APPARATUS AND METHOD FOR MANUFACTURING THREE DIMENSIONAL WORKPIECES
DISPOSITIF ET PROCÉDÉ DE FABRICATION DE PIÈCES TRIDIMENSIONNELLES

(30) Priorität: 24.03.2017 DE 102017205027
(43) Veröffentlichungstag der Anmeldung: 05.02.2020
(60) Teilanmeldung: 22193536.4
(73) Patentinhaber: SLM Solutions Group AG, 23560 Lübeck (DE)
(72) Erfinder: KROL, Toni Adam, 23560 Luebeck (DE); ROLINK, Gesa, 23560 Luebeck (DE); HAACK, Bodo, 23560 Luebeck (DE); HOPPE, Birk, 23560 Luebeck (DE)
(74) Vertreter: Schicker, Silvia
(86) Internationale Anmeldenummer: PCT/EP2018/055770
(87) Internationale Veröffentlichungsnummer: WO 2018/172092

(56) Entgegenhaltungen:
- EP-A1- 3 053 730
- EP-A1- 3 106 288
- EP-A2- 2 708 297
- WO-A1-2016/077250
- DE-A1-102014 218 639
- US-A1- 2014 175 708
- US-A1- 2015 367 574
- US-A1- 2016 136 730
- US-A1- 2017 014 907
- US-A1- 2017 072 643

## Beschreibung

Die Erfindung betrifft eine Vorrichtung und ein Verfahren zum Herstellen von dreidimensionalen Werkstücken. Insbesondere betrifft die Erfindung eine Vorrichtung und ein Verfahren zum Herstellen von dreidimensionalen Werkstücken mithilfe eines generativen Schichtbauverfahrens.

Bei generativen Verfahren zum Herstellen dreidimensionaler Werkstücke und insbesondere bei generativen Schichtbauverfahren ist es bekannt, eine zunächst formlose oder formneutrale Formmasse (zum Beispiel ein Rohstoffpulver) schichtweise auf einen Träger aufzutragen und durch ortsspezifisches Bestrahlen zu verfestigen (z. B. durch Verschmelzen oder Versintern), um letztendlich ein Werkstück einer gewünschten Form zu erhalten. Das Bestrahlen kann mittels elektromagnetischer Strahlung erfolgen, beispielsweise in Form von Laserstrahlung. In einem Ausgangszustand kann die Formmasse zunächst als Granulat, als Pulver oder als flüssige Formmasse vorliegen und infolge der Bestrahlung selektiv oder, anders ausgedrückt, ortsspezifisch verfestigt werden. Die Formmasse kann zum Beispiel Keramik-, Metall- oder Kunststoffmaterialien umfassen und auch Materialgemische hieraus. Eine Variante von generativen Schichtbauverfahren betrifft das sogenannte Pulverbettschmelzen, bei dem insbesondere metallische und/oder keramische Rohstoffpulvermaterialien zu dreidimensionalen Werkstücken verfestigt werden.

Zum Herstellen einzelner Werkstückschichten ist es ferner bekannt, Rohstoffpulvermaterial in Form einer Rohstoffpulverschicht auf einen Träger aufzubringen und selektiv sowie nach Maßgabe der Geometrie der aktuell herzustellenden Werkstückschicht zu bestrahlen. Die Laserstrahlung dringt in das Rohstoffpulvermaterial ein und verfestigt dieses, beispielsweise in Folge eines Erhitzens, was ein Schmelzen oder Sintern verursacht. Ist eine Werkstückschicht verfestigt, wird eine neue Schicht von unverarbeitetem Rohstoffpulvermaterial auf die bereits hergestellte Werkstückschicht aufgebracht. Hierzu können bekannte Beschichteranordnungen oder Pulverauftragsvorrichtungen verwendet werden. Anschließend erfolgt eine erneute Bestrahlung der nun obersten und noch unverarbeiteten Rohstoffpulverschicht. Folglich wird das Werkstück sukzessive Schicht für Schicht aufgebaut, wobei jede Schicht eine Querschnittsfläche und/oder eine Kontur des Werkstücks definiert. In diesem Zusammenhang ist es ferner bekannt, auf CAD- oder vergleichbare Werkstückdaten zurückzugreifen, um die Werkstücke im Wesentlichen automatisch herzustellen.

Eine Bestrahlungseinheit bzw. ein Bestrahlungssystem, das zum Beispiel in einer Vorrichtung zum Herstellen dreidimensionaler Werkstücke durch Bestrahlen von Rohstoffpulvermaterialien verwendbar ist, wird in der EP 2 333 848 B1 beschrieben. Das Bestrahlungssystem umfasst eine Strahlquelle, insbesondere eine Laserquelle, und eine optische Einheit. Die optische Einheit, der ein von der Strahlquelle ausgesandter Bearbeitungsstrahl zur Verfügung gestellt wird, umfasst eine Strahlenaufweiteinheit und eine Ablenkvorrichtung in Form einer Scannereinheit. Innerhalb der Scannereinheit sind diffraktive optische Elemente vor einem Ablenkspiegel vorgesehen, wobei die diffraktiven optischen Elemente in den Strahlenweg bewegbar sind, um den Bearbeitungsstrahl in eine Mehrzahl von Bearbeitungsteilstrahlen aufzuteilen. Der Ablenkspiegel dient dann zum Ablenken der Bearbeitungsteilstrahlen.

Es versteht sich, dass im Rahmen der vorliegenden Erfindung sämtliche der vorstehend erläuterten Aspekte ebenfalls vorgesehen sein können.

Bekannte Vorrichtungen zum Herstellen von dreidimensionalen Werkstücken finden sich beispielsweise in der EP 2 961 549 A1 und in der EP 2 878 402 A1.

Die in diesen Dokumenten beschriebenen Vorrichtungen umfassen jeweils einen Träger, welcher Schicht für Schicht in vertikale Richtung nach unten abgesenkt werden kann. Eine entsprechende vertikale Bewegung des Trägers findet in diesen bekannten Vorrichtungen immer dann statt, wenn eine Schicht des Rohstoffpulvers vollständig bestrahlt wurde und bevor die nächste Pulverschicht aufgetragen wird. Somit kann gewährleistet werden, dass sich eine Fokalebene der Bestrahlungseinheit immer in der zu verfestigen Schicht (d. h. in der obersten Schicht) des Rohstoffpulvers befindet.

In den oben beschriebenen bekannten Vorrichtungen erfordert die vertikale Bewegbarkeit des Trägers eine Aktorik bzw. eine Hubmechanik. Diese Hubmechanik muss unter anderem sowohl das aufzubauende Werkstück als auch das umgebende Pulvermaterial tragen und bewegen. Abhängig von der Anlagengröße und der Größe eines entsprechenden Bauraums kann die verwendete Hubmechanik hierbei an ihre Belastungsgrenzen kommen, was eine aufwändigere und somit teurere Hubmechanik erfordern würde. Ferner verändert sich während des Bauprozesses das von der Hubmechanik zu bewegende Gewicht. Dies kann dazu führen, dass der Verstellweg zwischen zwei Verstellvorgängen der Hubmechanik nicht konstant gehalten werden kann, was in unerwünschten Abweichungen der Schichtdicke der Rohstoffpulverschichten resultiert.

Das Dokument EP 3 106 288 A1 offenbart eine additive Fertigungsvorrichtung umfassend erste und zweite voneinander beabstandete Seitenwände, die sich entlang eines vordefinierten Pfades erstrecken und eine Baukammer dazwischen definieren, eine oder mehrere Baueinheiten, die zur Bewegung entlang des vordefinierten Pfades montiert sind, wobei die eine oder mehreren Baueinheiten mindestens eine der folgenden Komponenten umfassen: einen Pulverspender, der über der Baukammer positioniert ist, einen Applikator, der konfiguriert ist, um Pulver abzuschaben, das in die Baukammer abgegeben wurde und eine gerichtete Energiequelle, die konfiguriert ist, um das abgeschabte Pulver zu verschmelzen.

Das Dokument US 2014/175708 A1 offenbart eine Bauvorrichtung für ein dreidimensionales Objekt, welche enthält eine Pulveraustrageeinheit, die Pulver auf einen Objektbaubereich austrägt, eine Pulverabflachungsvorrichtung, die das von der Pulveraustrageeinheit ausgetragene Pulver abflacht, um eine Pulverschicht zu bilden, sowie eine Lichtabstrahlungseinheit, die oberhalb des Objektbauteils angeordnet ist und einen Lichtstrahl auf die Pulverschicht abstrahlt, um das Pulver zu sintern oder festzuschmelzen, um ein Objekt zu bauen. Die Bauvorrichtung für ein dreidimensionales Objekt enthält ferner einen Überführungsmechanismus, der eine Lichtabstrahlungseinheit in dreidimensionalen Richtungen bewegt, und eine Abschirmung, die sich integriert mit der Lichtabstrahlungseinheit bewegt und einen Raum oberhalb eines Bereichs der Pulverschicht, der kleiner ist als der Objektbaubereich, um den Lichtstrahl herum umgibt. Die Pulveraustrageeinheit und die Pulverabflachungsvorrichtung bewegen sich integriert mit der Lichtabstrahlungseinheit.

Aufgabe der Erfindung ist es, eine Lösung für ein generatives Schichtaufbauverfahren bereitzustellen, welche die oben genannten Probleme und andere damit zusammenhängende Probleme verringert oder überwindet, wobei die Lösung eine einfache und präzise Möglichkeit bereitstellt, die Schichtdicke einer Rohstoffpulverschicht beispielsweise auch bei großen Bauräumen zu kontrollieren.

Diese Aufgabe wird durch eine Vorrichtung mit den Merkmalen des Patentanspruchs 1 sowie ein Verfahren mit den Merkmalen des Patentanspruchs 12 gelöst. Die Erfindung betrifft demnach gemäß einem ersten Aspekt eine Vorrichtung zum Herstellen von dreidimensionalen Werkstücken. Die Vorrichtung umfasst einen Träger zum Aufnehmen von Rohstoffpulver und eine sich im Wesentlichen vertikal erstreckende Baukammerwand, welche dazu eingerichtet ist, das auf den Träger aufgetragene Rohstoffpulver seitlich zu begrenzen und abzustützen. Die Vorrichtung umfasst ferner eine Bestrahlungseinheit zum selektiven Bestrahlen des auf den Träger aufgetragenen Rohstoffpulvers mit elektromagnetischer Strahlung oder Teilchenstrahlung, um auf dem Träger ein aus dem Rohstoffpulver gefertigtes Werkstück durch ein generatives Schichtbauverfahren herzustellen, wobei die Bestrahlungseinheit mindestens ein optisches Element umfasst. Ferner umfasst die Vorrichtung eine vertikale Bewegungseinrichtung, welche dazu eingerichtet ist, die Bestrahlungseinheit vertikal bezüglich des Trägers zu bewegen, wobei die Baukammerwand und der Träger dazu eingerichtet sind, während der vertikalen Bewegung der Bestrahlungseinheit ortsfest miteinander verbunden zu sein, sodass die vertikale Bewegung relativ zu dem Träger und relativ zu der Baukammerwand verläuft, wobei die Baukammerwand mit dem Träger und/oder mit einem Fundament der Vorrichtung starr verbunden ist, oder wobei die Baukammerwand mit dem Träger und/oder mit dem Fundament lösbar verbunden und dazu eingerichtet ist, nach einem abgeschlossenen Bauprozess vom Träger gelöst zu werden, um das fertige Werkstück zu entnehmen, wobei die Vorrichtung eine horizontale Bewegungseinrichtung umfasst, welche dazu eingerichtet ist, die Bestrahlungseinheit horizontal bezüglich des Trägers und bezüglich des auf den Träger aufgetragenen Rohstoffpulvers zu bewegen, wobei die Vorrichtung mehrere nebeneinander angeordnete Baukammern umfasst, welche jeweils eine die jeweilige Baukammer seitlich umgebende Baukammerwand und einen Träger aufweisen, und wobei die horizontale Bewegungseinrichtung dazu eingerichtet ist, die Bestrahlungseinheit von einer ersten Baukammer der mehreren Baukammern zu einer zweiten Baukammer der mehreren Baukammern zu bewegen.

Hierbei kann der Träger eine horizontale Oberfläche bereitstellen, auf welche das Rohstoffpulver schichtweise, d. h. in horizontalen Schichten, aufgetragen werden kann. Die Baukammerwand kann hierbei zur seitlichen Begrenzung der Baukammer dienen. Die Baukammer kann beispielsweise - definiert durch die Baukammerwand - einen runden, elliptischen, vieleckigen oder rechteckigen, insbesondere einen quadratischen Querschnitt aufweisen. Das Rohstoffpulver wird von der

Baukammerwand so begrenzt und abgestützt, dass es von der Baukammerwand in Form gehalten wird, um nicht seitlich hinunter zu rieseln.

Der Begriff der Baukammer ist so zu verstehen, dass es sich dabei um einen räumlichen Bereich handelt, in dem die Auftragung der Rohstoffpulverschichten stattfindet und welcher nach unten durch den Träger und seitlich durch die Baukammerwand begrenzt wird. Die Baukammer kann hierbei ein luftdicht abgeschlossenes Volumen darstellen, welches nach oben durch einen passenden Deckenbereich und gegebenenfalls durch entsprechende Abdichtungsmittel luftdicht abgeschlossen ist. Der Deckenbereich kann hierbei zusammen mit der Bestrahlungseinheit vertikal bewegbar sein. Die Baukammer kann jedoch auch nach oben offen sein und somit kein klar definiertes Volumen definieren. Beispielsweise kann die Baukammer die Form eines nach oben offenen Quaders aufweisen. Die Baukammer kann sich innerhalb eines äußeren Gehäuses und/oder innerhalb einer Außenwand der Vorrichtung befinden. Ferner können sich neben der Baukammer noch weitere Baukammern innerhalb des äußeren Gehäuses als Teil der Vorrichtung befinden.

Bei den hierin beschriebenen Baukammern kann es sich um Baukammern mit einer Seitenlänge von beispielsweise jeweils mehr als 50 cm handeln. Anders ausgedrückt kann mindestens eine der beiden orthogonalen Seitenlängen des Trägers mindestens 50 cm betragen. Ferner kann mindestens eine der beiden orthogonalen Seitenlängen des Trägers mindestens 100 cm betragen. Es kann sich somit bei den hierin verwendeten Trägern beispielsweise um Träger mit einer Grundfläche von 1 m × 1 m handeln.

Bei dem optischen Element der Bestrahlungseinheit kann es sich beispielsweise um eine Scan-Einheit, eine Fokussier-Einheit und/oder um eine F-Theta-Linse handeln. Ferner kann die Bestrahlungseinheit eine Strahlquelle umfassen, wie beispielsweise eine Elektronenstrahlquelle oder einen Laser. Die von der Bestrahlungseinheit ausgesendete Strahlung kann der Bestrahlungseinheit jedoch auch von einer Strahlquelle zugeführt werden, welche sich außerhalb der Bestrahlungseinheit befindet. Hierfür können beispielsweise Spiegel, optische Fasern und/oder andere Lichtleiter verwendet werden.

Der Träger kann ortsfest mit einem Fundament der Vorrichtung verbunden sein. Das Fundament der Vorrichtung kann beispielsweise eine Bodenplatte der Vorrichtung umfassen. Das Fundament kann dazu eingerichtet sein, nach dem Aufbau der Vorrichtung und/oder während dem Betrieb der Vorrichtung (d. h. während einem Bauprozess) unbeweglich zu sein. Insbesondere kann das Fundament unbeweglich bezüglich einer vertikalen Richtung sein. Hierbei bedeutet der Begriff "unbeweglich" eine Ortsfestigkeit in Bezug auf die Umgebung, in welcher die Vorrichtung aufgebaut ist.

Die vertikale Bewegungseinrichtung kann beispielsweise eine Hubvorrichtung umfassen. Die vertikale Bewegungseinrichtung kann einen oder mehrere hydraulische und/oder mechanische Stellantriebe umfassen. Während der vertikalen Bewegung kann sich die Bestrahlungseinheit unabhängig von der Baukammerwand auf und ab bewegen. Insbesondere kann die Baukammerwand so ausgestaltet sein, dass diese mechanisch nicht mit der Bestrahlungseinheit gekoppelt ist und sich insbesondere nicht gemeinsam mit dieser auf und ab bewegt.

Durch diese Ortsfestigkeit der Baukammerwand kann gewährleistet werden, dass das sich darin befindliche Rohstoffpulver bei der vertikalen Bewegung nicht mechanisch beeinflusst wird und es insbesondere zu keiner ungewollten Störung des Rohstoffpulvers in Randbereichen der Baukammer kommt. Somit kann gewährleistet werden, dass eine Oberfläche des Rohstoffpulvers vor und nach der vertikalen Bewegung der Bestrahlungseinheit dieselbe (weitgehend horizontale und ebene) Struktur aufweist. Ferner können mechanische Reibungsverluste und somit Energieverluste an der Grenzfläche Baukammerwand-Rohstoffpulver vermieden werden, wenn die Baukammerwand während eines Bauprozesses nicht relativ zum Rohstoffpulver bewegt wird.

Die Baukammerwand kann dazu eingerichtet sein, das auf den Träger aufgetragene Rohstoffpulver seitlich vollständig zu umgeben und das Rohstoffpulver zu allen Seiten hin zu begrenzen und abzustützen.

Hierbei bedeutet "zu allen Seiten hin", dass die Baukammerwand in sämtliche horizontale Richtungen eine Barriere für das Rohstoffpulver darstellt. Es kann jedoch zumindest eine verschließbare Öffnung in der Baukammerwand vorgesehen sein, durch die beispielsweise Rohstoffpulver und/oder das fertige Werkstück entnommen werden kann.

Die Baukammerwand ist mit dem Träger und/oder mit einem Fundament der Vorrichtung starr verbunden oder die Baukammerwand ist mit dem Träger und/oder mit dem Fundament lösbar verbunden und dazu eingerichtet, nach einem abgeschlossenen Bauprozess vom Träger gelöst zu werden, um das fertige Werkstück zu entnehmen.

Wenn die Baukammerwand mit dem Träger lösbar verbunden ist, kann diese beispielsweise nach oben anhebbar sein, um nach einem beendeten Bauprozess das fertige Werkstück freizugeben und seitlich zugänglich zu machen. Hierfür kann eine entsprechende Hubvorrichtung zum Anheben der Baukammerwand vorgesehen sein.

Die Vorrichtung kann ferner eine Pulverauftragsvorrichtung umfassen, welche dazu eingerichtet ist, das Rohstoffpulver schichtweise auf den Träger aufzutragen.

Die Pulverauftragsvorrichtung kann einen Pulverbehälter umfassen oder und/oder mit einem Pulverreservoir verbunden sein, sodass der Pulverauftragsvorrichtung Rohstoffpulver zugeführt werden kann. Die Pulverauftragsvorrichtung kann dazu eingerichtet sein, in horizontaler Richtung über eine vorherige Pulverschicht zu fahren und dabei eine neue Pulverschicht aufzutragen. Hierfür kann die Pulverauftragsvorrichtung mindestens eine Walze, einen Schieber und/oder ähnliche geeignete Mittel zum Auftragen einer Rohstoffpulverschicht umfassen.

Die vertikale Bewegungseinrichtung kann dazu eingerichtet sein, die Bestrahlungseinheit zusammen mit der Pulverauftragsvorrichtung vertikal zu bewegen.

Hierbei kann die Pulverauftragsvorrichtung beispielsweise an einer Haltevorrichtung befestigt sein, welche sich gemeinsam mit der Bestrahlungseinheit auf und ab bewegen lässt. Somit kann der vertikale Abstand zwischen der Bestrahlungseinheit und der Pulverauftragsvorrichtung konstant gehalten werden. Hierdurch kann gewährleistet werden, dass sich eine neue aufgetragene Rohstoffpulverschicht stets in einer Fokalebene der Bestrahlungseinheit befindet.

Die Vorrichtung kann eine von der vertikalen Bewegungseinrichtung mechanisch unabhängige weitere vertikale Bewegungseinrichtung umfassen, welche dazu eingerichtet ist, die Pulverauftragsvorrichtung vertikal zu bewegen.

Die weitere vertikale Bewegungseinrichtung kann beispielsweise an der Baukammerwand befestigt seien. Die weitere vertikale Bewegungseinrichtung kann Führungselemente (beispielsweise Schienen) umfassen, welche an einer Innenseite der Baukammerwand vorgesehen sind, und an welchen die Pulverauftragsvorrichtung auf und ab gefahren werden kann.

Die Vorrichtung kann ferner eine Steuereinheit umfassen, welche dazu eingerichtet ist, die vertikale Bewegungseinrichtung so anzusteuern, dass die Bestrahlungseinheit vertikal relativ zu dem Träger und relativ zu der Baukammerwand entsprechend einer gewünschten Dicke einer jeweiligen, aufzutragenden Rohstoffpulverschicht in ihrer Höhe verstellbar ist.

Bei der Steuereinheit kann es sich um eine zentrale Steuereinheit der Vorrichtung handeln, welche eine Mehrzahl an Prozessabläufen der Vorrichtung überwacht und/steuert. Die Steuereinheit kann einen Prozessor (beispielsweise eine CPU) und einen Speicher umfassen. Auf dem Speicher kann ein Programm gespeichert sein, welches Befehle umfasst, die die Vorrichtung dazu veranlassen, den hierin beschriebenen Prozessablauf durchzuführen. Ein Verstellweg der vertikalen Bewegungseinrichtung, welcher im Rahmen eines Bewegungsvorgangs zwischen dem Verfestigen zweier Schichten durchfahren wird kann der Dicke einer Rohstoffpulverschicht entsprechen.

Die Vorrichtung kann ferner mindestens einen Gaseinlass, welcher dazu eingerichtet ist, ein Gas in eine durch die Baukammerwand definierte Baukammer zu leiten, und mindestens einen Gasauslass, welcher dazu eingerichtet ist, das vom Gaseinlass eingeleitete Gas einzusaugen, umfassen. Der Gaseinlass und der Gasauslass können insbesondere dazu eingerichtet sein, einen im Wesentlichen parallel zu dem Träger verlaufenden Gasstrom zu erzeugen.

Bei dem Gas kann es sich um ein Inertgas wie beispielsweise Argon oder Stickstoff handeln. Der Gaseinlass kann eine Öffnung umfassen, welche dazu eingerichtet ist, das Gas im Wesentlichen in horizontaler Richtung entlang einer Oberfläche der Rohstoffpulverschicht strömen zu lassen. Ferner kann ein Gasauslass zum Einsaugen des von dem Gaseinlass ausströmenden Gases vorgesehen sein. Der Gasauslass kann beispielsweise im Wesentlichen auf gleicher Höhe wie der Gaseinlass angeordnet sein. Ferner kann der Gasauslass gegenüber dem Gaseinlass in Richtung eines von dem Gaseinlass erzeugten Gasstroms angeordnet sein. Somit kann ein im Wesentlichen horizontaler laminarer Gasstrom entlang einer Oberfläche der Rohstoffpulverschicht erzeugt werden.

Die vertikale Bewegungseinrichtung kann dazu eingerichtet sein, die Bestrahlungseinheit zusammen mit dem Gaseinlass vertikal zu bewegen.

Somit kann gewährleistet werden, dass sich der Gaseinlass immer auf einer konstanten Höhe über der jeweils obersten Rohstoffpulverschicht befindet. Der Gaseinlass kann hierbei mechanisch starr mit der Bestrahlungseinheit gekoppelt sein. Wenn zusätzlich ein Gasauslass vorgesehen ist, kann die vertikale Bewegungseinrichtung ferner dazu eingerichtet sein, die Bestrahlungseinheit zusammen mit dem Gaseinlass und dem Gasauslass vertikal zu bewegen.

Die Vorrichtung kann mehrere nebeneinander angeordnete Bestrahlungseinheiten umfassen, welche jeweils mindestens ein optisches Element umfassen und welche jeweils dazu eingerichtet sind, einen elektromagnetischen Strahl oder einen Teilchenstrahl über das Rohstoffpulver zu scannen, wobei die vertikale Bewegungseinrichtung dazu eingerichtet ist, die mehreren Bestrahlungseinheiten gemeinsam vertikal bezüglich des Trägers zu bewegen.

Die Bestrahlungseinheiten können hierbei an einem gemeinsamen Rahmen befestigt sein. Ferner kann für jede der Bestrahlungseinheiten ein Bestrahlungsbereich innerhalb des Bauraums definiert sein. Die Bestrahlungsbereiche können auf einem gemeinsamen Träger oder auf mehreren für die jeweiligen Bestrahlungsbereiche vorgesehenen Trägern definiert sein. Die Bestrahlungseinheiten können dazu eingerichtet sein, unabhängig voneinander einen elektromagnetischen Strahl oder einen Teilchenstrahl über ihren jeweiligen Bestrahlungsbereich zu scannen. Ferner kann jede der Strahlungseinheiten eine Strahlquelle (beispielsweise einen Laser) umfassen, es kann jedoch auch eine gemeinsame Strahlquelle vorgesehen sein, deren Strahl durch zumindest einen Strahlteiler in Teilstrahlen für die jeweiligen Bestrahlungseinheiten aufgeteilt wird.

Die Vorrichtung umfasst erfindungsgemäß eine horizontale Bewegungseinrichtung, welche dazu eingerichtet ist, die Bestrahlungseinheit horizontal bezüglich des Trägers und bezüglich des auf den Träger aufgetragenen Rohstoffpulvers zu bewegen.

Die horizontale Bewegungseinrichtung ist dazu eingerichtet, so horizontal bewegt zu werden, dass Bereiche der Baukammer, welche vor der horizontalen Bewegung für die Bestrahlungseinheit nicht zugänglich waren, nach der horizontalen Bewegung von der Bestrahlungseinheit zugänglich sind und bestrahlt werden können. Anders ausgedrückt ist die horizontale Bewegungseinrichtung dazu eingerichtet, horizontal über ein und denselben Träger von ein und derselben Baukammer bewegt zu werden. Ferner ist die horizontale Bewegungseinrichtung dazu eingerichtet, die Bestrahlungseinheit von einer ersten Baukammer zu einer zweiten Baukammer zu bewegen, wie unten geschildert.

Die Vorrichtung umfasst erfindungsgemäß mehrere nebeneinander angeordnete Baukammern, welche jeweils eine die jeweilige Baukammer seitlich umgebende Baukammerwand und einen Träger aufweisen, wobei die horizontale Bewegungseinrichtung dazu eingerichtet ist, die Bestrahlungseinheit von einer ersten Baukammer der mehreren Baukammern zu einer zweiten Baukammer der mehreren Baukammern zu bewegen.

Die horizontale Bewegung kann hierbei so ausgeführt werden, dass sich die Bestrahlungseinheit zunächst im Wesentlichen zentral über dem Träger der ersten Baukammer befindet und nach der horizontalen Bewegung im Wesentlichen zentral über dem Träger der zweiten Baukammer befindet. Die horizontale Bewegungseinrichtung kann Rollen oder Räder aufweisen, mithilfe derer sie über ein gemeinsames Fundament bewegt werden kann, wobei die Rollen oder Räder über das gemeinsame Fundament laufen. Zusätzlich oder alternativ dazu können auf einem gemeinsamen Fundament Schienen oder andere geeignete Führungselemente vorgesehen sein, um die horizontale Bewegung von der ersten Baukammer zu der zweiten Baukammer zu führen. Der Träger der ersten Baukammer sowie der Träger der zweiten Baukammer können auf dem gemeinsamen Fundament angeordnet sein. Ferner kann der Träger der ersten Baukammer und/oder der Träger der zweiten Baukammer einen Teil einer Oberfläche des gemeinsamen Fundaments darstellen.

Dies gilt prinzipiell für sämtliche der hierin beschriebenen Träger: Der Träger kann einen Teil einer Oberfläche eines Größeren Elements, beispielsweise eines Fundaments, darstellen. Hierbei muss sich der Träger - abgesehen von der Baukammerwand - nicht strukturell von einer den Träger umgebenden Fläche abgrenzen. Beispielsweise kann der Träger lediglich als eine Fläche eines Fundaments definiert sein, wobei die Baukammerwand diese Fläche seitlich begrenzt. Die Baukammerwand kann beispielsweise nach oben anhebbar sein.

Die horizontale Bewegungseinrichtung kann auch so ausgestaltet sein, dass die Bestrahlungseinheit an einer gemeinsamen Decke der Vorrichtung hängend befestigt ist und entlang dieser gemeinsamen Decke von der ersten Baukammer zu der zweiten Baukammer geführt wird. Hierfür können beispielsweise Schienen oder andere lineare oder nichtlineare Führungselemente vorgesehen sein.

Die Vorrichtung kann ferner eine Steuereinheit umfassen, welche dazu eingerichtet ist, die horizontale Bewegungseinrichtung so anzusteuern, dass die Bestrahlungseinheit nach Beendigung eines ersten Bauprozesses in der ersten Baukammer horizontal zu der zweiten Baukammer bewegt wird und die Bestrahlungseinheit anschließend so anzusteuern, dass diese einen neuen Bauprozess in der zweiten Baukammer beginnt.

Somit kann das fertige Werkstück in der ersten Baukammer abkühlen und/oder bereits ausgepackt (von überschüssigen Rohstoffpulver befreit) werden, während ein Bauprozess in der zweiten Baukammer stattfindet. Bei der Steuereinheit kann es sich um dieselbe Steuereinheit handeln, welche auch die vertikale Bewegungseinrichtung ansteuert. Alternativ hierzu können auch getrennte Steuereinheiten vorgesehen sein. Ferner kann es sich bei der Steuereinheit um eine zentrale Steuereinheit der Vorrichtung handeln. Eine gemeinsame Steuereinheit der vertikalen Bewegungseinrichtung und der horizontalen Bewegungseinrichtung kann beispielsweise dazu eingerichtet sein, nach Beendigung des ersten Bauprozesses, falls erforderlich, die Bestrahlungseinheit vertikal vollständig aus der Baukammer anzuheben, diese anschließend horizontal über die Baukammerwände der ersten und der zweiten Baukammer zu bewegen und die Bestrahlungseinheit in der zweiten Baukammer abzusenken, sodass eine erste Rohstoffpulverschicht in der zweiten Baukammer aufgetragen und selektiv bestrahlt werden kann.

Gemäß einem zweiten Aspekt betrifft die Erfindung ein Verfahren zum Herstellen von dreidimensionalen Werkstücken. Das Verfahren umfasst Auftragen von Rohstoffpulver auf einen Träger, wobei das auf den Träger aufgetragene Rohstoffpulver von einer sich im Wesentlichen vertikal erstreckenden Baukammerwand seitlich begrenzt und abgestützt wird, und selektives Bestrahlen des auf den Träger aufgetragenen Rohstoffpulvers mit elektromagnetischer Strahlung oder Teilchenstrahlung durch eine Bestrahlungseinheit, um auf dem Träger ein aus dem Rohstoffpulver gefertigtes Werkstück durch ein generatives Schichtbauverfahren herzustellen, wobei die Bestrahlungseinheit mindestens ein optisches Element umfasst. Ferner umfasst das Verfahren vertikales Bewegen der Bestrahlungseinheit bezüglich des Trägers durch eine vertikale Bewegungseinrichtung, während die Baukammerwand und der Träger ortsfest miteinander verbunden sind, sodass die vertikale Bewegung relativ zu dem Träger und relativ zu der Baukammerwand verläuft. Die Baukammerwand ist mit dem Träger und/oder mit einem Fundament starr verbunden oder die Baukammerwand ist mit dem Träger und/oder mit dem Fundament lösbar verbunden und wird nach einem abgeschlossenen Bauprozess vom Träger gelöst, um das fertige Werkstück zu entnehmen. Das Verfahren umfasst ferner horizontales Bewegen der Bestrahlungseinheit von einer ersten Baukammer zu einer zweiten Baukammer durch eine horizontale Bewegungseinrichtung, nach Beendigung eines Bauprozesses in der ersten Baukammer, und Beginnen eines Bauprozesses in der zweiten Baukammer.

Das Verfahren kann beispielsweise von einer der hierin beschriebenen Vorrichtungen durchgeführt werden. Ferner kann das Verfahren sämtliche Verfahrensschritte umfassen, zu denen die hierin beschriebenen Vorrichtungen geeignet bzw. eingerichtet sind.

Die Erfindung wird im Folgenden anhand der beigefügten Figuren erläutert. Es stellen dar:
- Figur 1:: eine schematische Seitenansicht eines ersten Ausführungsbeispiels einer erfindungsgemäßen Vorrichtung, die ein erfindungsgemäßes Verfahren ausführt;
- Figur 2:: eine schematische Seitenansicht eines zweiten Ausführungsbeispiels einer erfindungsgemäßen Vorrichtung, die ein erfindungsgemäßes Verfahren ausführt; und
- Figur 3:: eine schematische Draufsicht eines dritten Ausführungsbeispiels einer erfindungsgemäßen Vorrichtung, die ein erfindungsgemäßes Verfahren ausführt.

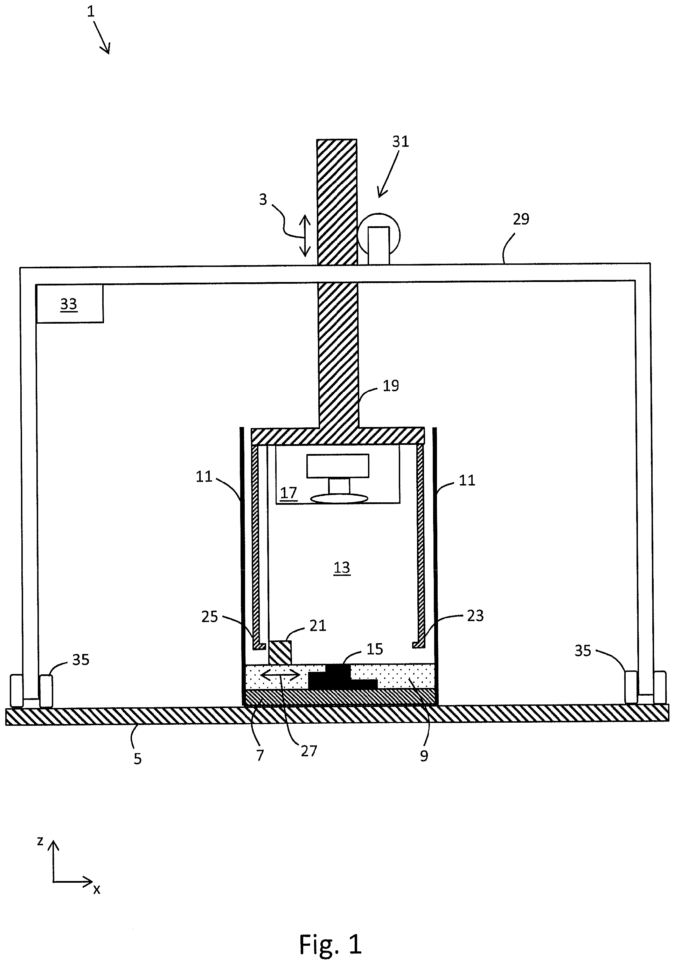

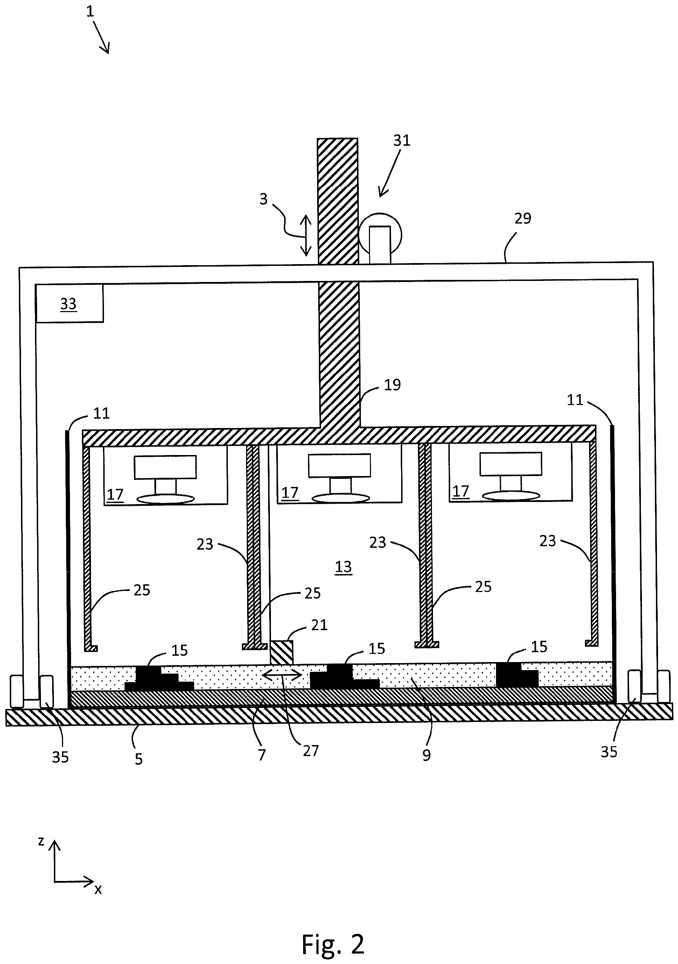

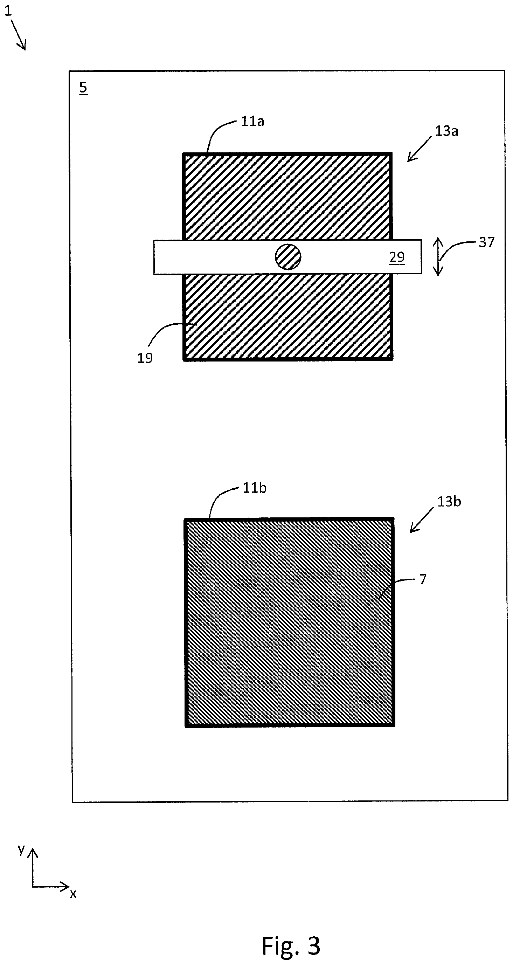

Obwohl im Folgenden im Zusammenhang mit den Figuren 1 bis 3 von "Ausführungsbeispielen" die Rede ist, zeigt lediglich Figur 3 ein Ausführungsbeispiel der vorliegenden Erfindung. Die Vorrichtungen der Figuren 1 und 2 können jedoch als Bestandteil des Ausführungsbeispiels der Vorrichtung gemäß Figur 3 verwendet werden, obwohl sie eigenständig jeweils kein Ausführungsbeispiel darstellen.

In Figur 1 wird ein erstes Ausführungsbeispiel einer erfindungsgemäßen Vorrichtung 1 in einer schematischen Seitenansicht dargestellt. Die Ansichten der Figuren sind nicht notwendigerweise maßstabsgetreu. Eine vertikale Richtung (im Folgenden auch z-Richtung) wird in der Figur durch den Pfeil 3 definiert und eine horizontale Ebene (im Folgenden auch x-y-Ebene) erstreckt sich senkrecht zur Zeichenebene entlang des Fundaments 5.

Das Fundament 5 stellt eine Bodenplatte der Vorrichtung 1 dar. Die Vorrichtung 1 kann ferner ein äußeres Gehäuse (nicht dargestellt) mit äußeren Wänden und einer äußeren Decke aufweisen. Die Vorrichtung 1 kann jedoch auch ohne eigenes äußeres Gehäuse in offener Bauweise beispielsweise in einer Fabrikhalle vorgesehen sein.

Auf dem Fundament 5 ist ein Träger 7 vorgesehen, welcher eine horizontale rechteckige Oberfläche aufweist. Der Träger 7 ist ortsfest mit dem Fundament 5 verbunden und dazu eingerichtet, mehrere Schichten an Rohstoffpulver 9 aufzunehmen. Seitlich an den Träger 7 grenzt eine Baukammerwand 11 an, welche den Träger 7 seitlich vollständig umgibt. Sowohl der Träger 7 als auch die Baukammerwand 11 weisen somit in Draufsicht einen rechteckigen Querschnitt auf. Die Baukammerwand 11 umgibt den Träger 7 seitlich so, dass sie an das sich auf dem Träger 7 befindende Rohstoffpulver 9 angrenzt, dieses seitlich abstützt und in einer quaderförmigen Form hält.

Die Baukammerwand 11 definiert eine sich innerhalb der Baukammerwand 11 befindende Baukammer 13. In der Baukammer 13 findet ein Bauprozess eines Werkstücks 15 mithilfe eines generativen Schichtbauverfahrens statt. Die Baukammer 13 wird seitlich durch die Baukammerwand 11 und nach unten durch den Träger 7 begrenzt. Eine physische Begrenzung der Baukammer 13 nach oben ist nicht notwendig, insbesondere muss die Baukammer 13 nach oben nicht luftdicht abgeschlossen sein. In der Darstellung der Figur 1 wird die Baukammer 13 nach oben durch eine Bestrahlungseinheit 17 und durch einen Teil eines Bestrahlungseinheitsträgers 19 begrenzt.

Die Baukammer 13 kann jedoch luftdicht abgeschlossen sein, beispielsweise durch Vorsehen von Abdichtungsmitteln (nicht dargestellt) zwischen der Baukammerwand 11 und dem Bestrahlungseinheitsträger 19. Dies hat den Vorteil, dass ein Schutzgas (beispielsweise ein Inertgas wie Argon oder Stickstoff) nicht aus der Baukammer 13 ausströmen kann und dass keine Verunreinigungen in die Baukammer 13 eindringen können. Ein luftdichtes Abdichten ist jedoch beispielsweise bei der Verwendung von Argon als Schutzgas nicht zwingend notwendig, da sich Argon aufgrund seiner hohen Dichte im Bereich des Baukammerbodens (also im Bereich des Rohstoffpulvers 9) ansammelt und nicht nach oben hin entweichen kann.

Die Vorrichtung 1 weist ferner eine Pulverauftragsvorrichtung 21 auf, mithilfe derer das Rohstoffpulver 9 schichtweise auf den Träger 7 aufgetragen werden kann. Hierzu kann die Pulverauftragsvorrichtung 21 mindestens eine Walze, mindestens einen Schieber und/oder andere geeignete Pulverauftragsmittel umfassen, welche dazu geeignet sind, eine möglichst gleichmäßig dicke Rohstoffpulverschicht auf dem Träger 7 bzw. auf einer vorherigen Rohstoffpulverschicht aufzutragen. Die Pulverauftragsvorrichtung 21 ist mit einem Rohstoffpulver-Reservoir (nicht dargestellt) verbunden, um von diesem mit Rohstoffpulver 9 versorgt zu werden.

Die Vorrichtung 1 weist ferner eine Bestrahlungseinheit 17 auf, zum selektiven Bestrahlen des schichtweise auf den Träger 7 aufgetragen Rohstoffpulvers 9. Mithilfe der Bestrahlungseinheit 17 kann das Rohstoffpulver 9 einer ortsselektiven Strahlung ausgesetzt werden, in Abhängigkeit von der gewünschten Geometrie des herzustellenden Werkstücks 15. Hierzu weist die Bestrahlungseinheit 17 eine Strahlquelle auf, welche in Form eines Lasers bereitgestellt werden kann. Dieser kann beispielsweise Licht bei einer Wellenlänge von ungefähr 1064 nm emittieren. Alternativ hierzu kann sich die Strahlquelle (beispielsweise ein Laser) auch außerhalb der Bestrahlungseinheit 17 befinden und ein auf das Rohstoffpulver 9 zu richtender Strahl wird der Bestrahlungseinheit 17 beispielsweise mithilfe einer optischen Faser zugeführt.

Die Bestrahlungseinheit 17 weist ferner optische Elemente, wie beispielsweise eine Scan-Einheit, eine Fokussier-Einheit und eine F-Theta-Linse auf. Die Scan-Einheit ist dazu eingerichtet, den Strahl über die oberste Rohstoffpulverschicht innerhalb einer horizontalen Ebene (in x-Richtung und y-Richtung) zu scannen. Die Fokussier-Einheit ist dazu eingerichtet, eine Fokus-Position des Strahls (in z-Richtung) zu verändern bzw. anzupassen, sodass eine Fokalebene der Bestrahlungseinheit 17 sich im Bereich der obersten Rohstoffpulverschicht befindet, welche von der Bestrahlungseinheit 17 bestrahlt wird. Die Bestrahlungseinheit 17 kann beispielsweise eine Bestrahlungseinheit bzw. Bestrahlungsvorrichtung wie in EP 2 333 848 B1 beschrieben sein.

Ferner weist die Vorrichtung 1 einen Gaseinlass 23 und einen Gasauslass 25 auf. Der Gaseinlass 23 weist eine Öffnung zum Ausströmen eines Gases (beispielsweise eines Inertgases wie Argon oder Stickstoff) auf. Ferner weist der Gasauslass 25 eine Öffnung zum Einsaugen des vom Gaseinlass 23 ausströmenden Gases auf. Die Öffnung des Gaseinlasses 23 und die Öffnung des Gasauslasses 25 sind im Wesentlichen auf gleicher Höhe und unter geringem Abstand zu einer Oberfläche des Rohstoffpulvers 9 angeordnet. Auf diese Weise kann ein laminarer und im Wesentlichen horizontaler Gasstrom parallel zum Träger 7 über die Oberfläche des Rohstoffpulvers 9 bereitgestellt werden. Dieser Gasstrom kann dazu geeignet sein, prozessbedingte Verunreinigungen (beispielsweise Spritzer und Schmelzschmauch) kontrolliert absaugen zu können. Der Gaseinlass 23 und der Gasauslass 25 können beispielsweise wie in der europäischen Patentanmeldung 15 186 889.0 beschrieben ausgestaltet sein.

Sowohl Gaseinlass 23 als auch Gasauslass 25 sind optionale Elemente der Vorrichtung 1, wobei diese Elemente weggelassen werden können oder an anderer Stelle vorgesehen sein können, als hierin beschrieben.

Die Bestrahlungseinheit 17, der Gaseinlass 23 und der Gasauslass 25 sind an dem Bestrahlungseinheitsträger 19 so befestigt, dass eine vertikale Bewegung des Bestrahlungseinheitsträgers 19 zu einer vertikalen Bewegung der Bestrahlungseinheit 17, des Gaseinlasses 23 und des Gasauslasses 25 führt. Ferner ist die Pulverauftragsvorrichtung 21 am Bestrahlungseinheitsträger 19 so befestigt, dass eine vertikale Bewegung des Bestrahlungseinheitsträgers 19 zu einer vertikalen Bewegung der Pulverauftragsvorrichtung 21 führt. Alternativ hierzu kann jedoch die Pulverauftragsvorrichtung 21 auch unabhängig von dem Bestrahlungseinheitsträger 19 angeordnet sein. Die Pulverauftragsvorrichtung 21 kann beispielsweise an der Baukammerwand 11 angeordnet sein und mit einer entsprechenden vertikalen Bewegungseinrichtung versehen sein, um entlang der Baukammerwand 11 auf und ab bewegt zu werden. Ferner ist für die Pulverauftragsvorrichtung 21 eine horizontale Bewegungseinrichtung vorgesehen, mithilfe derer die Pulverauftragsvorrichtung 21 über den Träger 7 in horizontaler Richtung bewegt werden kann, wie durch den Pfeil 27 angedeutet wird. Alternativ oder zusätzlich zu der Bewegung in Richtung des Pfeils 27 (x-Richtung), kann die horizontale Bewegungseinrichtung der Pulverauftragsvorrichtung 21 auch dazu eingerichtet sein, die Pulverauftragsvorrichtung 21 in y-Richtung über den Träger 7 zu bewegen.

Der Bestrahlungseinheitsträger 19 ist auf vertikal bewegliche Weise an einem Rahmen 29 befestigt. Der Bestrahlungseinheitsträger 19 und somit die Bestrahlungseinheit 17 können bezüglich des Rahmens 29 mithilfe einer vertikalen Bewegungseinrichtung 31 auf und ab bewegt werden. Die vertikale Bewegungseinrichtung 31 der in Figur 1 dargestellten Vorrichtung 1 umfasst einen Motor, bei dem es sich beispielsweise um einen Schrittmotor oder Servomotor handeln kann. Die vertikale Bewegungseinrichtung 31 kann auf vielfältige Weise ausgestaltet sein und kann beispielsweise jeglicher Art von Aktorik bzw. Hubvorrichtung umfassen. Beispielsweise kann die vertikale Bewegungseinrichtung 31 einen hydraulischen und/oder mechanischen Stellantrieb aufweisen. Die vertikale Bewegungseinrichtung 31 kann beispielsweise eine Spindelwelle und einen die Spindelwelle antreibenden Motor aufweisen.

Mithilfe der vertikalen Bewegungseinrichtung 31 kann ein vertikaler Abstand zwischen der Bestrahlungseinheit 17 und dem Träger 7 verändert werden. Insbesondere kann dieser Abstand so verändert werden, dass ein Abstand zwischen der Bestrahlungseinheit 17 und der obersten Schicht des Rohstoffpulvers 9 immer konstant bleibt. Die vertikale Bewegung der vertikalen Bewegungseinrichtung 31 findet unabhängig und relativ zu der Baukammerwand 11 statt, d. h. insbesondere, dass die Baukammerwand 11 von der vertikalen Bewegungseinrichtung 31 nicht bewegt wird.

Ferner umfasst die Vorrichtung 1 eine Steuereinheit 33, welche dazu eingerichtet ist, die vertikale Bewegungseinrichtung 31 und eine weiter unten beschriebene horizontale Bewegungseinrichtung 35 anzusteuern. Die Steuereinheit 33 umfasst eine CPU und einen Speicher, wobei ein Programm auf dem Speicher gespeichert ist, welches bei der Ausführung durch die CPU die Vorrichtung 1 dazu veranlasst, eines der hierin beschriebenen Verfahren durchzuführen. Ferner kann die Steuereinheit 33 sämtliche Steuerungsaufgaben der Vorrichtung 1 übernehmen und beispielsweise die Bestrahlungseinheit 17, die Pulverauftragsvorrichtung 21, den Gasstrom durch den Gaseinlass 23 und den Gasauslass 25 steuern.

Ein Bauprozess der Vorrichtung 1 findet so statt und wird von der Steuereinheit 33 so gesteuert, dass die vertikale Bewegungseinrichtung 31 die Pulverauftragsvorrichtung 21 so weit hinunter fährt, dass die Pulverauftragsvorrichtung 21 eine erste Rohstoffpulverschicht auf den Träger 7 auftragen kann. Anschließend oder gleichzeitig bewegt die vertikale Bewegungseinrichtung 31 - falls nötig - die Bestrahlungseinheit 17 auf eine Höhe, die dazu geeignet ist, diese erste Rohstoffpulverschicht selektiv zu bestrahlen und (beispielsweise durch Verschmelzen oder Versintern) zu verfestigen. Hierbei scannt die Scan-Einheit den Strahl gemäß einem vorbestimmten Muster über das Rohstoffpulver 9. Nachdem die erste Rohstoffpulverschicht wie gewünscht bestrahlt wurde, fährt die vertikale Bewegungseinrichtung 31 die Pulverauftragsvorrichtung 21 in eine Höhe, in der diese eine zweite Rohstoffpulverschicht auf die erste Rohstoffpulverschicht auftragen kann. Anschließend erfolgt ein Bestrahlungsvorgang der zweiten Rohstoffpulverschicht, analog zur Bestrahlung der ersten Rohstoffpulverschicht.

Während dem Aufbau des gewünschten Werkstücks 15 fährt die vertikale Bewegungseinrichtung 31 somit die Bestrahlungseinheit 17 (und ggf. die weiteren am Bestrahlungseinheitsträger 19 befestigten Komponenten, nämlich Gaseinlass 23, Gasauslass 25 und/oder Pulverauftragsvorrichtung 21) immer weiter von dem Träger 7 weg. Anschließend kann die Bestrahlungseinheit 17 vollständig nach oben aus der Baukammer 13 hinaus gehoben werden und mithilfe einer horizontalen Bewegungseinrichtung 35 zu einer weiteren Baukammer verfahren werden, wie weiter unten mit Bezug auf Figur 3 beschrieben wird.

Nachdem der Bauprozess in der Baukammer 13 beendet wurde, kann das fertige Werkstück 15 abkühlen und anschließend kann eine Hubvorrichtung (nicht dargestellt) die Baukammerwand 11 nach oben anheben, sodass das überschüssige Rohstoffpulver 9 seitlich aus der Baukammer 13 herausrieseln kann und das fertige Werkstück 15 seitlich zugänglich ist. Das Werkstück 15 kann nun vollständig vom überschüssigen Rohstoffpulver 9 befreit werden. Ferner kann in der Baukammerwand 11 eine verschließbare Öffnung vorgesehen sein, welche nach dem Bauprozess geöffnet werden kann und durch welche das fertige Werkstück 15 und/oder überschüssiges Rohstoffpulver 9 entnommen werden kann.

Der Rahmen 29 der Vorrichtung 1 weist ferner eine horizontale Bewegungseinrichtung 35 auf. In dem Ausführungsbeispiel der Figur 1 umfasst die horizontale Bewegungseinrichtung 35 Rollen, mithilfe derer der Rahmen 29 mitsamt dem daran befestigten Bestrahlungseinheitsträger 19 und der am Bestrahlungseinheitsträger 19 befestigten Komponenten (Bestrahlungseinheit 17, Gaseinlass 23, Gasauslass 25 und/oder Pulverauftragsvorrichtung 21) horizontal bewegt werden kann. Die Rollen werden hierbei von einem oder mehreren Motoren angetrieben, wobei die Motoren von der Steuereinheit 33 angesteuert werden. Hierbei wird der Rahmen 29 mithilfe der Rollen über das Fundament 5 gerollt. Zusätzlich können entsprechende (lineare oder nichtlineare) Führungselemente wie beispielsweise Schienen vorgesehen sein, welche die horizontale Bewegung des Rahmens 29 über das Fundament 5 führen. Alternativ zu der Ausführung der Figur 1, bei der der Rahmen 29 über Rollen über das Fundament 5 gerollt wird, kann der Rahmen 29 an einer Decke eines äußeren Gehäuses der Vorrichtung 1 horizontal beweglich befestigt sein, was beispielsweise durch entsprechende Schienen gewährleistet sein kann.

Die horizontale Bewegungseinrichtung 35 kann so ausgestaltet sein, dass diese nicht nur eine lineare Bewegung in eine horizontale Richtung ermöglicht, sondern kontrollierte Bewegungen innerhalb der horizontalen Ebene (sowohl in x-Richtung als auch in y-Richtung).

Die horizontale Bewegungseinrichtung 35 dient einerseits dazu, während dem Bauprozess des Werkstücks 15 Bereiche der Rohstoffpulverschichten für die Bestrahlungseinheit 17 zugänglich zu machen, welche vor der horizontalen Bewegung für die Bestrahlungseinheit 17 nicht zugänglich waren. Hierdurch lässt sich eine effektive Baufläche vergrößern und es können größere Werkstücke 15 hergestellt werden. Andererseits dient die horizontale Bewegungseinrichtung 35 dazu, die Bestrahlungseinheit 17 von einer ersten Baukammer zu einer zweiten Baukammer zu bewegen, wie später anhand von Figur 3 beschrieben wird.

In Figur 2 wird ein zweites Ausführungsbeispiel einer erfindungsgemäßen Vorrichtung 1 in einer schematischen Seitenansicht dargestellt. Hierbei entsprechen Elemente mit gleichem Bezugszeichen denen der Vorrichtung 1 der Figur 1. Die Funktionsweise dieser Elemente ist hierbei identisch zu der Funktionsweise der entsprechenden Elemente der Vorrichtung 1 der Figur 1.

Abweichend von der Vorrichtung 1 der Figur 1 weist die Vorrichtung 1 der Figur 2 nicht nur eine sondern mehrere nebeneinander angeordnete Bestrahlungseinheiten 17 auf. Im Beispiel der Figur 2 sind drei Bestrahlungseinheiten 17 vorgesehen, wobei auch weniger oder mehrere Bestrahlungseinheiten 17 vorgesehen sein können. Jede der Bestrahlungseinheiten 17 definiert einen Bestrahlungsbereich auf einem gemeinsamen Träger 7. In jedem der Bestrahlungsbereiche kann jeweils ein Werkstück 15 hergestellt werden. Es ist jedoch auch möglich, dass die Bestrahlungsbereiche der Bestrahlungseinheiten 17 direkt aneinander angrenzen oder überlappen, sodass ein großes Werkstück hergestellt werden kann, wobei jede der Bestrahlungseinheiten 17 für die Verfestigung eines vorbestimmten Bereichs des Werkstücks zuständig ist. Die drei Bestrahlungsbereiche befinden sich in einer gemeinsamen Baukammer 13, welche von einer Baukammerwand 11 umgeben ist.

Für jede der Bestrahlungseinheiten 17 ist ein Gaseinlass 23 und ein Gasauslass 25 für die Erzeugung eines horizontalen Gasstroms über den jeweiligen Bestrahlungsbereich vorgesehen. Alternativ hierzu können jedoch auch lediglich ein gemeinsamer Gaseinlass und ein gemeinsamer Gasauslass 25 vorgesehen sein, sodass beispielsweise lediglich an den äußeren Bereichen des Bestrahlungseinheitsträgers 19 ein Gaseinlass 23 und ein Gasauslass 25 vorgesehen sind. Ferner weist die Vorrichtung 1 eine gemeinsame Pulverauftragsvorrichtung 21 auf, welche Pulverschichten über die gesamte Fläche des Trägers 7 auftragen kann. Alternativ hierzu kann für jeden der Bestrahlungsbereiche eine eigene Pulverauftragsvorrichtung vorgesehen sein.

Dadurch dass die Vorrichtung 1 der Figur 2 mehrere Bestrahlungseinheiten 17 aufweist, können einerseits größere (gemeinsame) Werkstücke hergestellt werden und andererseits können gleichzeitig mehrere Werkstücke 15 hergestellt werden, was zu einer verringerten Prozesszeit pro Werkstück 15 führt.

Figur 3 zeigt ein drittes Ausführungsbeispiel einer Vorrichtung 1 zum Herstellen eines dreidimensionalen Werkstücks, wobei die Vorrichtung 1 des dritten Ausführungsbeispiels beispielsweise die Vorrichtung 1 der Figur 1 oder die Vorrichtung 1 der Figur 2 umfassen kann. Die Vorrichtung 1 der Figur 3 umfasst eine erste Baukammer 13a und eine zweite Baukammer 13b. Ferner können noch weitere Baukammern vorgesehen sein (nicht dargestellt).

In Figur 3 sind die erste Baukammer 13a und die zweite Baukammer 13b in Draufsicht dargestellt. Die Baukammer 13a ist von einer Baukammerwand 11a umgeben und die Baukammer 13b ist von einer Baukammerwand 11b umgeben. Bei der Baukammer 13a oder 13b kann es sich beispielsweise um eine der in Figur 1 oder Figur 2 dargestellten Baukammern 13 handeln. Die Baukammern 13a und 13b sind auf einem gemeinsamen Fundament 5 angeordnet.

Ferner befindet sich in dem von Figur 3 dargestellten Zustand der Rahmen 29 oberhalb der ersten Baukammer 13a, sodass ein Werkstück 15 innerhalb der ersten Baukammer 13a durch ein generatives Schichtbauverfahren hergestellt werden kann. Die hierfür notwendigen Elemente der Vorrichtung 1 entsprechen beispielsweise denen der Figur 1 oder der Figur 2.

Nach Beenden des Bauprozesses in der ersten Baukammer 13a fährt der Rahmen 29 mithilfe der horizontalen Bewegungseinrichtung 35 über das Fundament 5 von der ersten Baukammer 13a zu der zweiten Baukammer 13b, wie durch den Pfeil 37 dargestellt. Über der zweiten Baukammer 13b senkt sich nun die Bestrahlungseinheit 17 bzw. die Bestrahlungseinheiten 17 mithilfe der vertikalen Bewegungseinrichtung 31 über dem Träger 7 ab und es wird ein neuer (zweiter) Bauprozess in der zweiten Baukammer 13b begonnen.

Während des zweiten Bauprozesses kann das Werkstück 15 in der ersten Baukammer 13a abkühlen und beispielsweise durch Anheben der Baukammerwand 11a oder durch eine Öffnung in der Baukammerwand 11a bereits entnommen werden.

Dies ermöglicht ein Herstellen mehrerer Werkstücke 15 in mehreren Baukammern 13a, 13b mithilfe einer reduzierten Anzahl an Bestrahlungseinheiten 17, verglichen mit einer Situation, in der jede der Baukammern 13a, 13b eine eigene Bestrahlungseinheit 17 bzw. eigene Bestrahlungseinheiten 17 aufweist. Zusätzlich zu den zwei in der Figur 3 dargestellten Baukammer 13a und 13b können weitere Baukammern mit entsprechenden Baukammerwänden vorgesehen sein, sodass der Rahmen 29 mitsamt seiner (seinen) Bestrahlungseinheit(en) 17 (sowie ggf. den weiteren am Bestrahlungseinheitsträger 19 befestigten Komponenten, nämlich Gaseinlass/Gaseinlässe 23, Gasauslass/Gasauslässe 25 und/oder Pulverauftragsvorrichtung/en 21) diese Baukammern nacheinander abfahren kann und jeweils einen Bauprozess in der jeweiligen Baukammer durchführen kann.

Bei den hierin beschriebenen Baukammern 13, 13a, 13b kann es sich um große Baukammern mit einer Seitenlänge von beispielsweise jeweils mehr als 50 cm handeln. Anders ausgedrückt kann mindestens eine der beiden orthogonalen Seitenlängen des Trägers 7 mindestens 50 cm betragen. Ferner kann mindestens eine der beiden orthogonalen Seitenlängen des Trägers 7 mindestens 100 cm betragen. Es kann sich somit bei den hierin verwendeten Trägern 7 um Träger mit einer Grundfläche von 1 m × 1 m handeln.

Dadurch dass die hierin beschriebene Vorrichtung eine vertikal bewegbare Bestrahlungseinheit aufweist, findet eine Relativbewegung der Bestrahlungseinheit relativ zum Träger statt, ohne dass der Träger bewegt werden muss. Bei der Verwendung entsprechend großer Träger hat dies den Vorteil, dass keine schwere Pulvermenge und kein schweres Werkstück während des Bauprozesses bewegt werden müssen.

Ferner wird die Bestrahlungseinheit relativ zu der Baukammerwand bewegt, sodass die Baukammerwand in Bezug zum Rohstoffpulver fest stehen bleibt und keine Reibung an einer Grenzfläche der Baukammerwand zum Rohstoffpulver stattfindet und somit keine Störung der Pulverschichten auftritt. Dadurch, dass die Baukammerwand in Bezug zum Rohstoffpulver fest stehen bleibt, ist es relativ unproblematisch, die Baukammerwand zum Träger hin abzudichten, d.h., sicher zu stellen, dass kein Pulver durch einen Spalt zwischen Baukammerwand und Träger hindurch gelangen kann. Bei konventionellen Vorrichtungen stellt diese Abdichtung ein größeres Problem dar, da sich der Träger relativ zur Baukammerwand vertikal bewegen können muss.

Ferner ermöglicht eine Bewegbarkeit der Bestrahlungseinheit unabhängig von der Baukammerwand eine Bewegbarkeit der Bestrahlungseinheit von einer ersten Baukammer zu einer zweiten Baukammer und von dort gegebenenfalls zu weiteren Baukammern.

## Patentansprüche

1. Vorrichtung (1) zum Herstellen von dreidimensionalen Werkstücken (15), umfassend:
- einen Träger (7) zum Aufnehmen von Rohstoffpulver (9),
- eine sich im Wesentlichen vertikal erstreckende Baukammerwand (11, 11a, 11b), welche dazu eingerichtet ist, das auf den Träger (7) aufgetragene Rohstoffpulver (9) seitlich zu begrenzen und abzustützen,
- eine Bestrahlungseinheit (17) zum selektiven Bestrahlen des auf den Träger (7) aufgetragenen Rohstoffpulvers (9) mit elektromagnetischer Strahlung oder Teilchenstrahlung, um auf dem Träger (7) ein aus dem Rohstoffpulver (9) gefertigtes Werkstück (15) durch ein generatives Schichtbauverfahren herzustellen, wobei die Bestrahlungseinheit (17) mindestens ein optisches Element umfasst, und
- eine vertikale Bewegungseinrichtung (31), welche dazu eingerichtet ist, die Bestrahlungseinheit (17) vertikal bezüglich des Trägers (7) zu bewegen, wobei die Baukammerwand (11, 11a, 11b) und der Träger (7) dazu eingerichtet sind, während der vertikalen Bewegung der Bestrahlungseinheit (17) ortsfest miteinander verbunden zu sein, sodass die vertikale Bewegung relativ zu dem Träger (7) und relativ zu der Baukammerwand (11, 11a, 11b) verläuft,
wobei die Baukammerwand (11, 11a, 11b) mit dem Träger (7) und/oder mit einem Fundament (5) der Vorrichtung starr verbunden ist, oder
wobei die Baukammerwand (11, 11a, 11b) mit dem Träger (7) und/oder mit dem Fundament (5) lösbar verbunden und dazu eingerichtet ist, nach einem abgeschlossenen Bauprozess vom Träger (7) gelöst zu werden, um das fertige Werkstück (15) zu entnehmen,
wobei die Vorrichtung (1) eine horizontale Bewegungseinrichtung (35) umfasst, welche dazu eingerichtet ist, die Bestrahlungseinheit (17) horizontal bezüglich des Trägers (7) und bezüglich des auf den Träger (7) aufgetragenen Rohstoffpulvers (9) zu bewegen,
wobei die Vorrichtung (1) mehrere nebeneinander angeordnete Baukammern (13a, 13b) umfasst, welche jeweils eine die jeweilige Baukammer (13a, 13b) seitlich umgebende Baukammerwand (11a, 11b) und einen Träger (7) aufweisen, und
wobei die horizontale Bewegungseinrichtung (35) dazu eingerichtet ist, die Bestrahlungseinheit (17) von einer ersten Baukammer (13a) der mehreren Baukammern zu einer zweiten Baukammer (13b) der mehreren Baukammern zu bewegen.

2. Vorrichtung (1) nach Anspruch 1, wobei die Baukammerwand (11, 11a, 11b) dazu eingerichtet ist, das auf den Träger (7) aufgetragene Rohstoffpulver (9) seitlich vollständig zu umgeben und das Rohstoffpulver (9) zu allen Seiten hin zu begrenzen und abzustützen.

3. Vorrichtung (1) nach Anspruch 1 oder 2, ferner umfassend eine Pulverauftragsvorrichtung (21), welche dazu eingerichtet ist, das Rohstoffpulver (9) schichtweise auf den Träger (7) aufzutragen.

4. Vorrichtung (1) nach Anspruch 3, wobei die vertikale Bewegungseinrichtung (31) dazu eingerichtet ist, die Bestrahlungseinheit (17) zusammen mit der Pulverauftragsvorrichtung (21) vertikal zu bewegen.

5. Vorrichtung (1) nach Anspruch 3, ferner umfassend eine von der vertikalen Bewegungseinrichtung (31) mechanisch unabhängige weitere vertikale Bewegungseinrichtung, welche dazu eingerichtet ist, die Pulverauftragsvorrichtung (21) vertikal zu bewegen.

6. Vorrichtung (1) nach einem der Ansprüche 1 bis 5, ferner umfassend eine Steuereinheit (33), welche dazu eingerichtet ist, die vertikale Bewegungseinrichtung (31) so anzusteuern, dass die Bestrahlungseinheit (17) vertikal relativ zu dem Träger (7) und relativ zu der Baukammerwand (11, 11a, 11b) entsprechend einer gewünschten Dicke einer jeweiligen, aufzutragenden Rohstoffpulverschicht in ihrer Höhe verstellbar ist.

7. Vorrichtung (1) nach einem der Ansprüche 1 bis 6, ferner umfassend mindestens einen Gaseinlass (23), welcher dazu eingerichtet ist, ein Gas in eine durch die Baukammerwand (11, 11a, 11b) definierte Baukammer (13, 13a, 13b) zu leiten, und mindestens einen Gasauslass (25), welcher dazu eingerichtet ist, das vom Gaseinlass (23) eingeleitete Gas einzusaugen, wobei der Gaseinlass (23) und der Gasauslass (25) insbesondere dazu eingerichtet sind, einen im Wesentlichen parallel zu dem Träger (7) verlaufenden Gasstrom zu erzeugen.

8. Vorrichtung (1) nach Anspruch 7, wobei die vertikale Bewegungseinrichtung (31) dazu eingerichtet ist, die Bestrahlungseinheit (17) zusammen mit dem Gaseinlass (23) und dem Gasauslass (25) vertikal zu bewegen.

9. Vorrichtung (1) nach Anspruch 8, wobei der Gasauslass (25) gegenüber dem Gaseinlass (23) in Richtung des von dem Gaseinlass (23) erzeugten Gasstroms angeordnet ist.

10. Vorrichtung (1) nach einem der Ansprüche 1 bis 9, wobei die Vorrichtung (1) mehrere nebeneinander angeordnete Bestrahlungseinheiten (17) umfasst, welche jeweils mindestens ein optisches Element umfassen und welche jeweils dazu eingerichtet sind, einen elektromagnetischen Strahl oder einen Teilchenstrahl über das Rohstoffpulver (9) zu scannen und wobei die vertikale Bewegungseinrichtung (31) dazu eingerichtet ist, die mehreren Bestrahlungseinheiten (17) gemeinsam vertikal bezüglich des Trägers (7) zu bewegen.

11. Vorrichtung (1) nach einem der Ansprüche 1 bis 10, ferner umfassend eine Steuereinheit (33), welche dazu eingerichtet ist, die horizontale Bewegungseinrichtung (35) so anzusteuern, dass die Bestrahlungseinheit (17) nach Beendigung eines ersten Bauprozesses in der ersten Baukammer (13a) horizontal zu der zweiten Baukammer (13b) bewegt wird und die Bestrahlungseinheit (17) anschließend so anzusteuern, dass diese einen neuen Bauprozess in der zweiten Baukammer (13b) beginnt.

12. Verfahren zum Herstellen von dreidimensionalen Werkstücken (15), umfassend:
- Auftragen von Rohstoffpulver (9) auf einen Träger (7), wobei das auf den Träger (7) aufgetragene Rohstoffpulver (9) von einer sich im Wesentlichen vertikal erstreckenden Baukammerwand (11, 11a, 11b) seitlich begrenzt und abgestützt wird,
- selektives Bestrahlen des auf den Träger (7) aufgetragenen Rohstoffpulvers (9) mit elektromagnetischer Strahlung oder Teilchenstrahlung durch eine Bestrahlungseinheit (17), um auf dem Träger (7) ein aus dem Rohstoffpulver (9) gefertigtes Werkstück (15) durch ein generatives Schichtbauverfahren herzustellen, wobei die Bestrahlungseinheit (17) mindestens ein optisches Element umfasst, und
- vertikales Bewegen der Bestrahlungseinheit (17) bezüglich des Trägers (7) durch eine vertikale Bewegungseinrichtung (31), während die Baukammerwand (11, 11a, 11b) und der Träger (7) ortsfest miteinander verbunden sind, sodass die vertikale Bewegung relativ zu dem Träger (7) und relativ zu der Baukammerwand (11, 11a, 11b) verläuft,
wobei die Baukammerwand (11, 11a, 11b) mit dem Träger (7) und/oder mit einem Fundament (5) starr verbunden ist, oder
wobei die Baukammerwand (11, 11a, 11b) mit dem Träger (7) und/oder mit dem Fundament (5) lösbar verbunden und nach einem abgeschlossenen Bauprozess vom Träger (7) gelöst wird, um das fertige Werkstück (15) zu entnehmen,
wobei das Verfahren ferner umfasst:
- horizontales Bewegen der Bestrahlungseinheit (17) von einer ersten Baukammer (13a) zu einer zweiten Baukammer (13b) durch eine horizontale Bewegungseinrichtung (35), nach Beendigung eines Bauprozesses in der ersten Baukammer (13a), und
- Beginnen eines Bauprozesses in der zweiten Baukammer (13b)

13. Verfahren nach Anspruch 12, ferner umfassend:
- Leiten eines Gases von mindestens einem Gaseinlass (23) in eine durch die Baukammerwand (11, 11a, 11b) definierte Baukammer (13, 13a, 13b) und Einsaugen des vom Gaseinlass (23) eingeleiteten Gases durch einen Gasauslass (25), wobei der Gaseinlass (23) und der Gasauslass (25) einen im Wesentlichen parallel zu dem Träger (7) verlaufenden Gasstrom erzeugen.

14. Verfahren nach Anspruch 13, wobei beim vertikalen Bewegen die vertikale Bewegungseinrichtung (31) die Bestrahlungseinheit (17) zusammen mit dem Gaseinlass (23) und dem Gasauslass (25) vertikal bewegt.

15. Verfahren nach Anspruch 14, wobei der Gasauslass (25) gegenüber dem Gaseinlass (23) in Richtung des von dem Gaseinlass (23) erzeugten Gasstroms angeordnet ist.

## Claims

1. A device (1) for producing three-dimensional workpieces (15), comprising:
- a carrier (7) for receiving raw material powder (9),
- a build chamber wall (11, 11a, 11b) which extends substantially vertically and which is adapted to laterally delimit and support the raw material powder (9) applied to the carrier (7),
- an irradiation unit (17) for selectively irradiating the raw material powder (9) applied to the carrier (7) with electromagnetic radiation or particle radiation in order to produce on the carrier (7) a workpiece (15) manufactured from the raw material powder (9) by an additive layer building method, wherein the irradiation unit (17) comprises at least one optical element, and
- a vertical movement device (31) which is adapted to move the irradiation unit (17) vertically with respect to the carrier (7), wherein the build chamber wall (11, 11a, 11b) and the carrier (7) are adapted to be connected to one another in a stationary manner during the vertical movement of the irradiation unit (17) so that the vertical movement takes place relative to the carrier (7) and relative to the build chamber wall (11, 11a, 11b),
wherein the build chamber wall (11, 11a, 11b) is rigidly connected to the carrier (7) and/or to a base (5) of the device, or
wherein the build chamber wall (11, 11a, 11b) is detachably connected to the carrier (7) and/or to the base (5) and is adapted to be detached from the carrier (7) on completion of a build process, in order to remove the finished workpiece (15),
wherein the device (1) further comprises a horizontal movement device (35) which is adapted to move the irradiation unit (17) horizontally with respect to the carrier (7) and with respect to the raw material powder (9) applied to the carrier (7),
wherein the device (1) comprises a plurality of build chambers (13a, 13b) arranged side by side, each of which has a build chamber wall (11a, 11b) which laterally surrounds the respective build chamber (13a, 13b), and a carrier (7), and
wherein the horizontal movement device (35) is adapted to move the irradiation unit (17) from a first build chamber (13a) of the plurality of build chambers to a second build chamber (13b) of the plurality of build chambers.

2. The device (1) as claimed in claim 1, wherein the build chamber wall (11, 11a, 11b) is adapted to laterally surround the raw material powder (9) applied to the carrier (7) completely and to delimit and support the raw material powder (9) on all sides.

3. The device (1) as claimed in claim 1 or 2, further comprising a powder application device (21) which is adapted to apply the raw material powder (9) layer by layer to the carrier (7).

4. The device (1) as claimed in claim 3, wherein the vertical movement device (31) is adapted to move the irradiation unit (17) vertically together with the powder application device (21).

5. The device (1) as claimed in claim 3, further comprising a further vertical movement device which is mechanically independent of the vertical movement device (31) and which is adapted to move the powder application device (21) vertically.

6. The device (1) as claimed in any one of claims 1 to 5, further comprising a control unit (33) which is adapted to control the vertical movement device (31) in such a manner that the irradiation unit (17) is vertically adjustable in terms of its height relative to the carrier (7) and relative to the build chamber wall (11, 11a, 11b) according to a desired thickness of a respective raw material powder layer that is to be applied.

7. The device (1) as claimed in any one of claims 1 to 6, further comprising at least one gas inlet (23) which is adapted to direct a gas into a build chamber (13, 13a, 13b) defined by the build chamber wall (11, 11a, 11b), and at least one gas outlet (25) which is adapted to draw in the gas introduced from the gas inlet (23), wherein the gas inlet (23) and the gas outlet (25) are in particular adapted to generate a gas stream flowing substantially parallel to the carrier (7).

8. The device (1) as claimed in claim 7, wherein the vertical movement device (31) is adapted to move the irradiation unit (17) vertically together with the gas inlet (23) and the gas outlet (25).

9. The device (1) as claimed in claim 8, wherein the gas outlet (25) is arranged opposite the gas inlet (23) in the direction of the gas stream generated by the gas inlet (23).

10. The device (1) as claimed in any one of claims 1 to 9, wherein the device (1) comprises a plurality of irradiation units (17) arranged side by side, each of which comprises at least one optical element and each of which is adapted to scan an electromagnetic beam or a particle beam over the raw material powder (9), and wherein the vertical movement device (31) is adapted to move the plurality of irradiation units (17) together vertically with respect to the carrier (7).

11. The device (1) as claimed in any one of claims 1 to 10, further comprising a control unit (33) which is adapted to control the horizontal movement device (35) in such a manner that the irradiation unit (17), on completion of a first build process in the first build chamber (13a), is moved horizontally to the second build chamber (13b), and then to control the irradiation unit (17) in such a manner that it begins a new build process in the second build chamber (13b).

12. A method for producing three-dimensional workpieces (15), comprising:
- applying raw material powder (9) to a carrier (7), wherein the raw material powder (9) applied to the carrier (7) is laterally delimited and supported by a build chamber wall (11, 11a, 11b) extending substantially vertically,
- selectively irradiating the raw material powder (9) applied to the carrier (7) with electromagnetic radiation or particle radiation by an irradiation unit (17) in order to produce on the carrier (7) a workpiece (15) manufactured from the raw material powder (9) by an additive layer building method, wherein the irradiation unit (17) comprises at least one optical element, and
- moving the irradiation unit (17) vertically with respect to the carrier (7) by means of a vertical movement device (31), while the build chamber wall (11, 11a, 11b) and the carrier (7) are connected to one another in a stationary manner, so that the vertical movement takes place relative to the carrier (7) and relative to the build chamber wall (11, 11a, 11b),
wherein the build chamber wall (11, 11a, 11b) is rigidly connected to the carrier (7) and/or to a base (5), or
wherein the build chamber wall (11, 11a, 11b) is detachably connected to the carrier (7) and/or to the base (5) and is detached from the carrier (7) on completion of a build process, in order to remove the finished workpiece (15),
wherein the method further comprises:
- moving the irradiation unit (17) horizontally from a first build chamber (13a) to a second build chamber (13b) by means of a horizontal movement device (35), on completion of a build process in the first build chamber (13a), and
- beginning a build process in the second build chamber (13b).

13. The method as claimed in claim 12, further comprising:
- directing a gas from at least one gas inlet (23) into a build chamber (13, 13a, 13b) defined by the build chamber wall (11, 11a, 11b), and drawing in the gas introduced from the gas inlet (23) by a gas outlet (25), wherein the gas inlet (23) and the gas outlet (25) generate a gas stream flowing substantially parallel to the carrier (7).

14. The method as claimed in claim 13, wherein upon vertically moving, the vertical movement device (31) moves the irradiation unit (17) vertically together with the gas inlet (23) and the gas outlet (25).

15. The method as claimed in claim 14, wherein the gas outlet (25) is arranged opposite the gas inlet (23) in the direction of the gas stream generated by the gas inlet (23).

## Revendications

1. Dispositif (1) pour fabriquer des pièces tridimensionnelles (15) comprenant :
- un support (7)pour loger une poudre de matière première (9),
- une paroi (11, 11a, 11b) de chambre de construction s'étendant sensiblement à la verticale, qui est conçue pour supporter et limiter latéralement la poudre de matière première (9) appliquée sur le support (7),
- une unité de rayonnement (17) pour exposer au rayonnement électromagnétique ou au rayonnement de particules de manière sélective la poudre de matière première (9) appliquée sur le support (7) pour fabriquer la pièce (15) fabriquée à partir de poudre de matière première (9) selon un procédé génératif de construction par couches, l'unité de rayonnement (17) comprenant au moins un élément optique, et
- un dispositif de déplacement vertical (31), qui est conçu pour déplacer verticalement l'unité de rayonnement par rapport au support (7), la paroi de chambre de construction (11, 11a, 11b) et le support (7) étant conçus, pendant le déplacement vertical de l'unité de rayonnement (17), pour qu'ils soient reliés à demeure l'un à l'autre de sorte que le mouvement vertical se produise par rapport au support (7) et par rapport à la paroi de chambre de construction (11, 11a, 11b),
dans lequel la paroi de chambre de construction (11, 11a, 11b) est reliée fixe au support (7) et/ou à la fondation (5) du dispositif, ou
dans lequel la paroi de chambre de construction (11, 11a, 11b) est reliée amovible au support (7) et/ou à la fondation (5) et est conçue, une fois le processus de construction terminée, pour se détacher du support (7) pour retirer la pièce terminée (15),
dans lequel le dispositif (1) comprend un dispositif de déplacement horizontal (35), qui est conçu pour déplacer l'unité de rayonnement (17) horizontalement par rapport au support (7) et par rapport à la poudre de matière première (9) appliquée sur le support (7),
dans lequel le dispositif (1) comprend plusieurs chambres de construction (13a, 13b) disposées les unes à côté des autres, qui comportent une paroi de chambre de construction (11a, 11b) entourant latéralement chaque chambre de construction (13a, 13b) et un support, et
le dispositif de déplacement horizontal (35) est conçu pour déplacer l'unité de rayonnement (17) à partir d'une première chambre de construction (13a) de la pluralité de chambres de construction vers une seconde chambre de construction (13b) de la pluralité de chambres de construction.

2. Dispositif (1) selon la revendication 1, dans lequel la paroi de chambre de construction (11, 11a, 11b) est conçue pour entourer entièrement latéralement la poudre de matière première (9) appliquée sur le support (7) et pour limiter et supporter la poudre de matière première (9) de tous les côtés.

3. Dispositif (1) selon la revendication 1 ou 2, comprenant en outre un dispositif d'application de poudre (21) qui est conçu pour appliquer par couche la poudre de matière première (9) sur le support (7).

4. Dispositif (1) selon la revendication 3, dans lequel le dispositif de déplacement (31) est conçu pour se déplacer verticalement conjointement avec le dispositif d'application de poudre (21).

5. Dispositif (1) selon la revendication 3, comprenant en outre un autre dispositif de déplacement vertical indépendant mécaniquement du dispositif de déplacement vertical (31), qui est conçu pour déplacer verticalement le dispositif d'application de poudre (21).

6. Dispositif (1) selon l'une quelconque des revendications 1 à 5, comprenant en outre une unité de commande (33), qui est conçue pour commander le dispositif de déplacement (31) à amener l'unité de rayonnement (17) à être réglée en hauteur verticalement par rapport au support (7) et par rapport à la paroi de chambre de construction (11, 11a, 11b) conformément à une épaisseur souhaitée d'une couche de poudre de matière première respective à appliquer.

7. Dispositif (1) selon l'une quelconque des revendications 1 à 6, comprenant en outre au moins une entrée de gaz (23) qui est conçue pour conduire un gaz dans une chambre de construction (13, 13a, 13b) définie par la paroi de chambre de construction (11, 11a, 11b) , et au moins une sortie de gaz (25) qui est conçue pour aspirer le gaz conduit depuis l'entrée de gaz (23), l'entrée de gaz (23) et la sortie de gaz (25) étant notamment conçues pour produire un flux gazeux s'écoulant sensiblement parallèle au support (7).

8. Dispositif (1) selon la revendication 7, dans lequel le dispositif de déplacement vertical (31) est conçu pour déplacer verticalement l'unité de rayonnement (17) conjointement avec l'entrée de gaz (23) et la sortie de gaz (25).

9. Dispositif (1) selon la revendication 8, dans lequel la sortie de gaz (25) est disposée en face de rentrée de gaz (23) en direction du flux gazeux produit par l'entrée de gaz (23).

10. Dispositif (1) selon l'une quelconque des revendications 1 à 9, dans lequel le dispositif (1) comprend plusieurs unités de rayonnement (17) disposées côte à côte, qui respectivement comprennent au moins un élément optique et qui respectivement sont conçues pour balayer un rayon électromagnétique ou un rayon de particules sur la poudre de matière première (9) et dans lequel le dispositif de déplacement vertical (31) est conçu pour déplacer plusieurs unités de rayonnement (17) conjointement verticalement par rapport au support (7).

11. Dispositif (1) selon l'une quelconque des revendications 1 à 10, comprenant en outre une unité de commande (33) qui est conçue pour commander le dispositif de mouvement horizontal (35) de manière à ce que l'unité de rayonnement (17) soit déplacée dans la première chambre de construction (13a) horizontalement par rapport à la seconde chambre de construction (13b) à la fin du premier processus de construction et pour commander ensuite l'unité de rayonnement (17) de manière à ce que celle=ci commence un nouveau processus de construction dans la seconde chambre de construction (13b).

12. Procédé de fabrication de pièces tridimensionnelles (15) consistant à :
- appliquer de la poudre de matière première (9) sur un support (7), la poudre de matière première (9) appliquée sur le support (7) étant limitée et supportée latéralement par une paroi de chambre de construction (11, 11a, 11b) s'étendant sensiblement verticalement
- exposer au rayonnement sélectif électromagnétique ou au rayonnement de particules la poudre de matière première (9) appliquée sur le support (7) par une unité de rayonnement (17) pour fabriquer la pièce (15) fabriquée à partir de poudre de matière première (9) selon un procédé génératif de construction par couche, l'unité de rayonnement (17) comprenant au moins un élément optique, et
- déplacer verticalement l'unité de rayonnement (17) par rapport au support (7) par un dispositif de déplacement vertical (31), pendant que la paroi de chambre de construction (11, 11a, 11b) et le support (7) sont reliés à demeure l'un à l'autre, de sorte que le déplacement vertical se déroule par rapport au support (7) et par rapport à la paroi de chambre de construction (11, 11a, 11b)
dans lequel la paroi de chambre de construction (11, 11a, 11b) est reliée fixe au support (7) et/ou à la fondation (5), ou
dans lequel la paroi de chambre de construction (11, 11a, 11b) est reliée amovible au support (7) et/ou à la fondation (5) et est détachée une fois un processus de construction terminé pour retirer la pièce terminée (15),
dans lequel le processus consiste en outre à :
- déplacer horizontalement l'unité de rayonnement (17) d'une première chambre de construction (13a) à une seconde chambre de construction (13b) par un dispositif de déplacement horizontale (35), après la fin d'un processus de construction dans la première chambre de construction (13a), et
= lancer un processus de construction dans la seconde chambre de construction (13b),

13. Procédé selon la revendication 12, consistant en outre à :
- conduire un gaz provenant d'au moins une entrée de gaz (23) dans une chambre de construction (13, 13a, 13b) définie par la paroi de chambre de construction (11, 11a, 11b) et aspirer le gaz conduit à partir de l'admission de gaz (23) par une sortie de gaz (25), l'entrée de gaz (23) et la sortie de gaz (25) produisent un flux gazeux s'écoulant sensiblement parallèlement au support (7).

14. Procédé selon la revendication 13, dans lequel lors du déplacement vertical le dispositif de déplacement vertical (31) déplace verticalement l'unité de rayonnement (17) conjointement avec l'entrée de gaz (23) et la sortie de gaz (25).

15. Procédé (1) selon la revendication 14, dans lequel la sortie de gaz (25) est disposée en face de l'entrée de gaz (23) en direction du flux gazeux produit par l'entrée de gaz (23).
